# EUROPEAN PATENT APPLICATION

(11) **EP 4 668 953 A1**
(43) Date of publication of application: **24.12.2025**
(21) Application number: 23922696.2
(22) Date of filing: 15.02.2023
(51) Int. Cl.: H04W 72/0457, H04W 8/22, H04W 28/12

(54) **NETWORK NODE AND COMMUNICATION METHOD**

(71) Applicant: NTT DOCOMO, INC., Tokyo 100-6150 (JP)
(72) Inventor: MINOKUCHI, Atsushi, Tokyo 100-6150 (JP); HATANAKA, Yoshitaka, Tokyo 100-6150 (JP); SAWADA, Masahiro, Tokyo 100-6150 (JP)
(74) Representative: Hoffmann Eitle
(86) International application number: PCT/JP2023/005341
(87) International publication number: WO 2024/171359

(57) **Abstract**

A network node includes: a communication unit configured to receive, from a terminal via a RAN (Radio Access Network) node, a registration request including information indicating that two master nodes are used; and a control unit configured to store two terminal contexts of the two respective master nodes. The control unit stores master node identifiers corresponding to RAN nodes, remaining terminal radio capabilities, and remaining terminal radio resources in the terminal contexts of respective master nodes, the control unit derives two CM (Connection management) states of the terminal, based on the terminal contexts of the two respective master nodes, and the communication unit indicates a remaining terminal radio capability and a remaining terminal radio resource included in a terminal context, of the terminal contexts of the two respective master nodes, corresponding to one of the two master nodes, to another of the two master nodes.

## Description

### TECHNICAL FIELD

The present invention relates to a network node and a communication method in a communication system.

### BACKGROUND ART

In 3GPP (registered trademark) (3rd Generation Partnership Project), in order to realize even larger system capacity, even faster data transmission speeds, even lower latency in a wireless communication section, etc., a wireless communication method called "5G" or "NR (New Radio)" is being discussed (hereinafter, the wireless communication method is referred to as "5G" or "NR"). In 5G, various wireless technologies have been discussed in order to meet requirements including latency equal to or less than 1 ms in a wireless section while realizing a throughput equal to or greater than 10 Gbps.

In NR, an architecture has been discussed which includes: 5GC (5G Core Network) corresponding to EPC (Evolved Packet Core) that is a core network in an LTE (Long Term Evolution) network architecture; and NG-RAN (Next Generation - Radio Access Network) corresponding to E-UTRAN (Evolved Universal Terrestrial Radio Access Network) that is a RAN (Radio Access Network) in the LTE network architecture (e.g., Non-Patent Literature 1).

### CITATION LIST

### Non-Patent Literature

Non-Patent Literature 1: 3GPP TS 23.501 V18.0.0 (2022-12)
Non-Patent Literature 2: 3GPP TS 38.413 V17.3.0 (2022-12)
Non-Patent Literature 3: 3GPP TS 33.501 V18.0.0 (2022-12)
Non-Patent Literature 4: 3GPP TS 38.304 V17.2.0 (2022-12)
Non-Patent Literature 5: 3GPP TS 23.502 V18.0.0 (2022-12)
Non-Patent Literature 6: 3GPP TS 24.501 V18.1.0 (2022-12)
Non-Patent Literature 7: 3GPP TS 29.244 V18.0.1 (2022-12)
Non-Patent Literature 8: 3GPP TS 24.193 V18.0.0 (2022-12)
Non-Patent Literature 9: 3GPP TS 38.331 V17.3.0 (2022-12)
Non-Patent Literature 10: 3GPP TS 38.300 V17.3.0 (2022-12)

### SUMMARY OF INVENTION

### TECHNICAL PROBLEM

When transitioning to 5G, DC (Dual Connectivity) is adopted in order to stabilize the initial coverage at the time of wireless system deployment. However, DC has been difficult to implement under the multi-vendor environment. Therefore, during the transition to the next generation wireless system, a method that can stabilize the initial coverage at the time of deployment without using DC is desired.

Here, in DC, the MN (Master node) leads, via the interface Xn, in the allocation of the terminal radio capability between the MN and the SN and in the allocation of radio resources in a case where the frequencies are shared between the MN and the SN. Even in a method that does not use DC, if the method includes operations of two base stations on the network side, a process related to distribution of radio resources is required.

The present invention has been made in view of the above points and is intended to perform distribution of radio resources in a wireless communication system in which the two base stations both operate as a master node.

### SOLUTION TO PROBLEM

According to the disclosed technique, a network node is provided. The network node includes: a communication unit configured to receive, from a terminal via a RAN (Radio Access Network) node, a registration request including information indicating that two master nodes are used; and a control unit configured to store two terminal contexts of respective master nodes. The control unit stores master node identifiers corresponding to RAN nodes, remaining terminal radio capabilities, and remaining terminal radio resources in the terminal contexts of respective master nodes, the control unit derives two CM (Connection management) states of the terminal, based on the terminal contexts of respective master nodes, and the communication unit indicates a remaining terminal radio capability and a remaining terminal radio resource included in a terminal context of the terminal contexts of respective master nodes corresponding to one of the two master nodes, to another of the two master nodes.

### ADVANTAGEOUS EFFECTS OF INVENTION

According to the disclosed technique, the distribution of radio resources can be performed in a wireless communication system in which two base stations both operate as a master node.

### BRIEF DESCRIPTION OF DRAWINGS

[Fig. 1] is a drawing for describing an example of a communication system.
[Fig. 2] is a drawing for describing an example of a communication system under a roaming environment.
[Fig. 3] is a drawing for describing an example of a network in an embodiment of the present invention.
[Fig. 4] is a sequence diagram for describing an example of initial configuration and configuration modification in an embodiment of the present invention.
[Fig. 5] is a sequence diagram for describing an example of cell selection in an embodiment of the present invention.
[Fig. 6] is a sequence diagram for describing an example of a registration procedure in an embodiment of the present invention.
[Fig. 7] is a sequence diagram for describing an example (1) of a PDU session establishment procedure in an embodiment of the present invention.
[Fig. 8] is a sequence diagram for describing an example (2) of a PDU session establishment procedure in an embodiment of the present invention.
[Fig. 9] is a sequence diagram for describing an example (3) of a PDU session establishment procedure in an embodiment of the present invention.
[Fig. 10] is drawing illustrating an example of a functional structure of a base station 10 and a network node 30 in an embodiment of the present invention.
[Fig. 11] is a drawing illustrating an example of a functional configuration of a terminal 20 in an embodiment of the present invention.
[Fig. 12] is a drawing illustrating an example of a hardware structure of the base station 10 and the terminal 20 in an embodiment of the present invention.
[Fig. 13] is a drawing illustrating an example of a structure of a vehicle 2001 in an embodiment of the present invention.

### DESCRIPTION OF EMBODIMENTS

In the following, while referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. It should be noted that, although the conventional techniques may be the conventional LTE, the conventional techniques are not limited to the conventional LTE. Further, it is assumed that the term "LTE" used in the present specification has, unless otherwise specifically mentioned, a broad meaning including a scheme of LTE-Advanced and a scheme after LTE-Advanced (e.g., NR), or wireless LAN (Local Area Network).

Further, in an embodiment of the present invention, the expression, radio parameters are "configured" may mean that a predetermined value is pre-configured, or may mean that a radio parameter indicated by a network node 30 or a terminal 20 is configured.

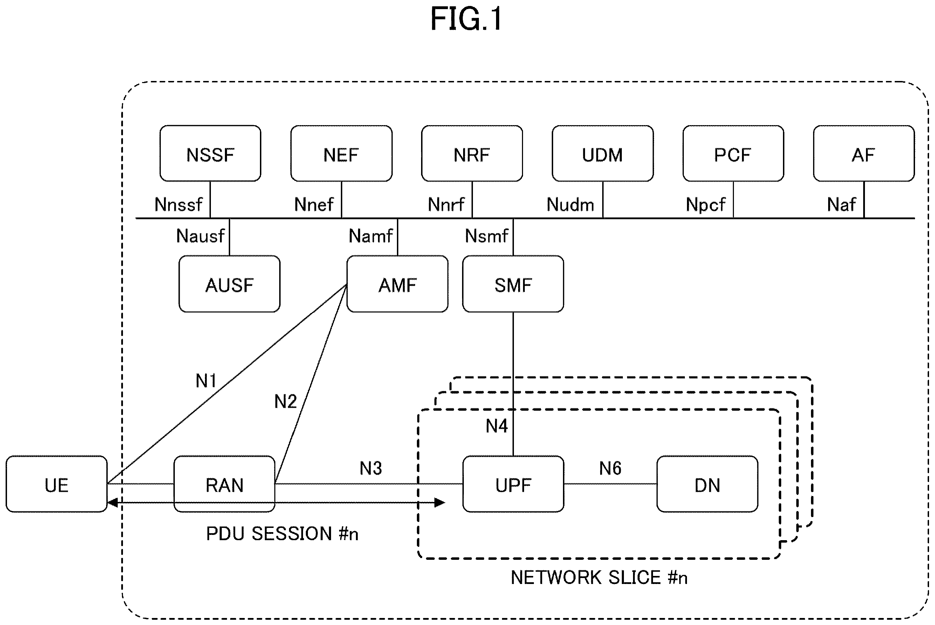

Fig. 1 is a drawing illustrating an example of a communication system. As illustrated in Fig. 1, the communication system includes a UE that is a terminal 20, and a plurality of network nodes 30. Hereafter, one network node 30 corresponds to each function, but multiple functions may be implemented by one network node 30 or one function may be implemented by multiple network nodes 30. The "connections" described below may be either a logical connection or a physical connection.

RAN (Radio Access Network) is a network node 30 with wireless access functions, may include a base station 10, and is connected to UE, AMF (Access and Mobility Management Function) and UPF (User plane function). The AMF is a network node 30 having functions of, for example, terminating the RAN interface, terminating the NAS (Non-Access Stratum), managing registration, managing connection, managing reachability, and managing mobility. The UPF is a network node 30 interconnected with DN (Data Network), and has functions such as a PDU (Protocol Data Unit) session point to an external unit, routing and forwarding packets, and QoS (Quality of Service) handling of the user plane. The UPF and the DN forms a network slice. In a wireless communication network in an embodiment of the present invention, multiple network slices are included.

AMF is connected to UE, RAN, SMF (Session Management Function), NSSF (Network Slice Selection Function), NEF (Network Exposure Function), NRF (Network Repository Function), UDM (Unified Data Management), AUSF (Authentication Server Function), PCF (Policy Control Function), and AF (Application Function). AMF, SMF, NSSF, NEF, NRF, UDM, AUSF, PCF, and AF are network nodes 30 connected to each other via interfaces Namf, Nsmf, Nnssf, Nnef, Nnrf, Nudm, Nausf, Npcf, Naf based on the respective services.

The SMF is a network node 30 having functions such as session management, Internet Protocol (IP) address assignment and management of UE, DHCP (Dynamic Host Configuration Protocol) function, ARP (Address Resolution Protocol) proxy, and roaming function. The NEF is a network node 30 having a function of indicating capabilities and events to other NFs (Network Functions). The NSSF is a network node 30 having functions of, for example, selecting the network slice to which the UE is to be connected, determining the allowed NSSAI (Network Slice Selection Assistance Information), determining the configured NSSAI, and determining the AMF set to which the UE is to be connected. The PCF is a network node 30 having a function of performing a policy control of the network. The AF is a network node 30 having a function of controlling application servers. The NRF is a network node 30 having a function of discovering an NF instance for providing services. The UDM is a network node 30 that performs management of the subscriber data and the authentication data. UDM is connected to UDR (User Data Repository) that stores the above-described data;

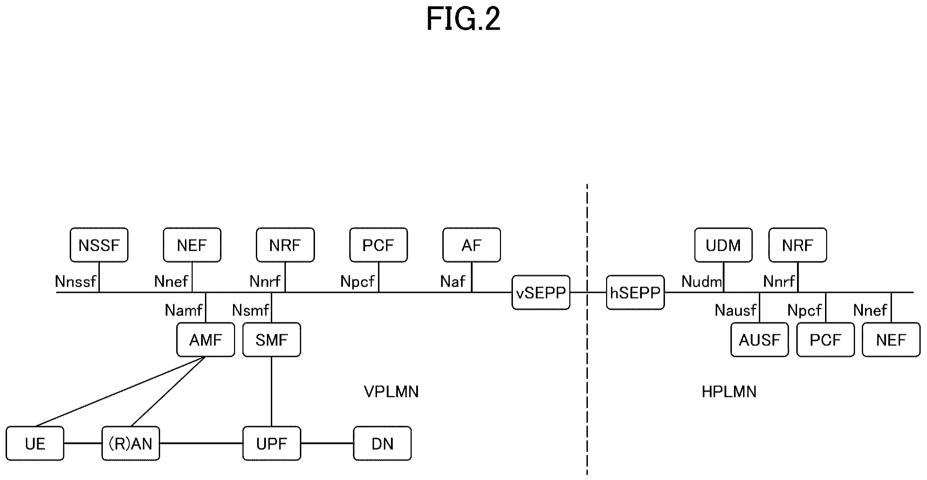

Fig. 2 is a drawing illustrating an example of a communication system under a roaming environment. As illustrated in Fig. 2, the network includes a UE that is a terminal 20 and a plurality of network nodes 30. Hereafter, one network node 30 corresponds to each function, but multiple functions may be implemented by one network node 30 or one function may be implemented by multiple network nodes 30. The "connections" described below may be either a logical connection or a physical connection.

The RAN is a network node 30 having a radio access function, and is connected to UE, AMF, and UPF. The AMF is a network node 30 having functions of: termination of a RAN interface; termination of NAS; registration management; connection management; reachability management; mobility management; etc. The UPF is a network node 30 having functions of: a PDU session point for the external party that is mutually connected to the DN; packet routing and forwarding, user plane QoS handling; etc. The UPF and the DN forms a network slice. In a wireless communication network in an embodiment of the present invention, multiple network slices are included.

AMF is connected to UE, RAN, SMF, NSSF, NEF, NRF, UDM, AUSF, PCF, AF, and SEPP (Security Edge Protection Proxy). AMF, SMF, NSSF, NEF, NRF, UDM, AUSF, PCF, and AF are network nodes 30 connected to each other via interfaces Namf, Nsmf, Nnssf, Nnef, Nnrf, Nudm, Nausf, Npcf, Naf based on the respective services.

The SMF is a network node 30 having functions of: session management; UE IP address allocation and management; DHCP functionality; ARP proxy; roaming functionality; etc. The NEF is a network node 30 having a function of indicating capabilities and events to other NFs. The NSSF is a network node 30 having functions of: selection of a network slice to which the UE is connected; determination of NSSAI to be permitted; determination of NSSAI to be configured; determination of an AMF set to which the UE is connected; etc. The PCF is a network node 30 having a function of performing a policy control of the network. The AF is a network node 30 having a function of controlling application servers. The NRF is a network node 30 having a function of discovering an NF instance for providing services. SEPP is a non-transparent proxy and filters control plane messages between PLMNs (Public Land Mobile Networks). vSEPP shown in Fig. 2 is a SEPP in a visited network, and hSEPP is a SEPP in a home network.

As illustrated in Fig. 2, the UE is in a roaming environment in which the UE is connected to the RAN and the AMF in the VPLMN (Visited PLMN). The VPLMN and the HPLMN (Home PLMN) are connected to each other via the vSEPP and the hSEPP. For example, the UE can communicate with the UDM in the HPLMN via the AMF in the VPLMN.

Here, when transitioning to 5G, DC (Dual Connectivity) is adopted in order to stabilize the initial coverage at the time of wireless system deployment. However, DC has been difficult to implement under the multi-vendor environment. Therefore, during the transition to the next generation wireless system, a method that can stabilize the initial coverage at the time of deployment without using DC is desired.

It is to be noted that, as a methodology of transitioning to 5G, the dual registration is also specified in the technical specification. The deployment of the dual registration has been intended to resolve the mutual operations between: EPC and E-UTRA; and 5GC and NR, in a case where there is no N26 interface between the AMF and the MME (refer to Non-Patent Literature 1). The dual registration has been unable to provide a sufficient resolution for a phenomenon in which the registration is performed in both EPC and 5GC via the same E-UTRA cell when 5GC and E-UTRA are included. Therefore, in a case where the next generation core network is an enhancement of 5GC, the dual registration standardized in the 5G transition methodology cannot be reused.

That is, although, in a case where the next generation core network is expected to be an enhancement of 5GC, a method of achieving stabilization of initial coverage at the time of deployment of the next generation wireless system without using DC is desired, currently, such a method does not exist.

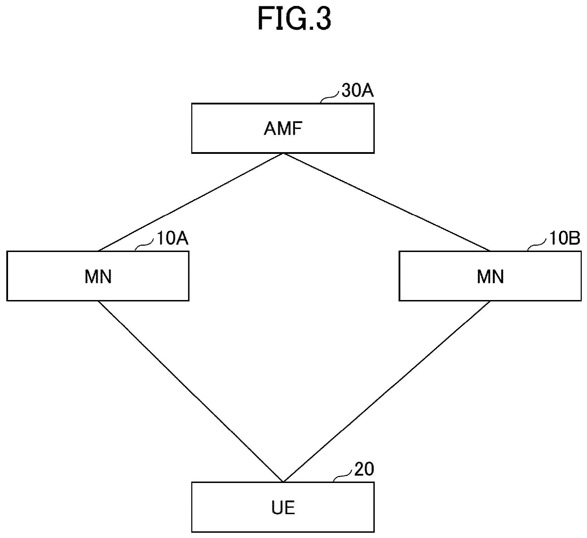

Accordingly, in a case where a terminal is registered or connected to a network, the terminal may have two MNs (Master Nodes). Fig. 3 is a drawing for describing an example of a network in an embodiment of the present invention. A new configuration in which there are: two RRC (Radio Resource Control) states; two CM (Connection management) states; and one registration state (RM (Registration management) state) is introduced for a terminal. A QoS flow may be distributed or split between the two MNs. In addition, the cells used for the standby and the paging may be restricted. As illustrated in Fig. 3, the two MNs recognize each other via the AMF and may select an appropriate destination MN at the time of handover.

It is to be noted that an RM-DEREGISTERED state and an RM-REGISTERED state are defined in the conventional technical specification related to the registration. A terminal and an AMF each have an RM state. The transition of the RM states is based on a NAS signal. With respect to one terminal, mutually independent RM states are defined for corresponding accesses. An access is, for example, a 3GPP access, a non-3GPP access, or the like.

It is to be noted that a CM-IDLE state and a CM-CONNECTED state are defined in the conventional technical specification related to connections. A terminal and an AMF each have a CM state. The transition of CM states is based on an RRC signal in a case of the terminal and is based on an N2 signal that is used in the interface to the RAN in a case of the AMF. With respect to one terminal, mutually independent CM states are defined for corresponding accesses. An access is, for example, a 3GPP access, a non-3GPP access, or the like.

It is to be noted that the ATSSS (Access Traffic Steering, Switching, Splitting) handles distribution and splitting of a QoS flow between the 3GPP access and the non-3GPP access in the conventional technical specification.

For example, the AMF may control one RM state and two CM states with respect to the 3GPP access by the terminal. The AMF may store an MN identifier, a Global RAN Node ID (refer to Non-Patent Literature 1), a RAN UE NGAP (NG Application Protocol) ID (refer to Non-Patent Literature 2), and an AMF UE NGAP ID (refer to Non-Patent Literature 2), not in each access level terminal context, but in each of the two newly introduced MN level terminal contexts. The AMF may use the MN level terminal context for: routing of messages between the RAN and the SMF; differentiation of K_{gNB} (refer to Non-Patent Literature 3); deriving the CM state of each connection; deriving the UE-CM state indicating the terminal reachability. The terminal may control one RM state and two CM states with respect to the 3GPP access. It is to be noted that the RAN UE NGAP ID is an identifier for identifying a UE on the NG interface in the RAN node, and the AMF UE NGAP ID is an identifier for identifying a UE on the NG interface in the AMF.

For example, the SMF may allocate a QoS flow of a PDU session between a plurality of MNs. The SMF may indicate a policy to the RAN, and may allocate a QoS flow of a PDU session between a plurality of MNs, based on the determination by the RAN. The SMF may request the terminal to transmit a request for transmitting the PDU session change with respect to the existing 3GPP access PDU session from another MN. The RAN may determine the QoS flow distribution and/or the QoS flow splitting of the PDU session, based on the policy indicated by the SMF. The terminal may transmit a request for the PDU session change from the second MN with respect to the existing 3GPP access PDU session, based on the indication indicated by the SMF.

For example, the RAN may configure paging activation or paging deactivation. The paging deactivation indicates to be a RAN node that does not perform paging. In a case of paging deactivation, the RAN may indicate the information to the terminal by using the broadcast information, and may indicate the information to the AMF by using the terminal independent N2 message. The AMF is not required to transmit, to the paging deactivated RAN, the paging via N2. The terminal is not required to include the cell of the paging deactivated RAN as a candidate of the cell selection and cell reselection. In a case where the terminal camps on a cell of a paging activated RAN in a normal manner, the terminal may include a cell of a paging deactivated RAN in as a candidate of the cell selection or the cell reselection.

For example, in a case where there is another RAN in the surrounding area, a RAT (Radio access technology) of the another RAN being different from that of the "buddy RAN node" that is the other MN in the dual MN configuration, the RAN may be prioritized to be selected as a handover destination, based on a configuration. Alternatively, in a case where there is another RAN in the surrounding area, a RAT of the another RAN being the same as that of the buddy RAN node, the RAN may be prioritized to be selected as a handover destination. The RAN may select the handover destination based on the information related to the buddy RAN node indicated by the AMF. The AMF may indicate the information related to the buddy node to the RAN. In a case of having transitioned to the CM-CONNECTED with respect to the two MNs, the AMF may indicate the information related to the buddy node to the RAN.

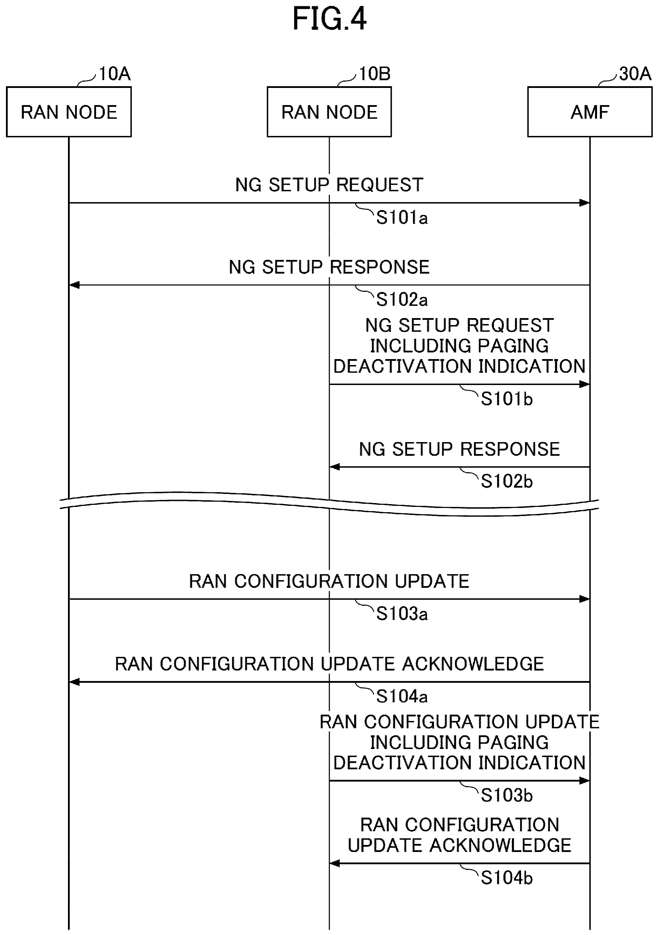

Fig. 4 is a sequence diagram for describing an example of initial configuration and configuration modification in an embodiment of the present invention. In step S101a, the RAN node 10A transmits an NG SETUP REQUEST to the AMF 30A (refer to Non-Patent Literature 2). In subsequent step S102a, the AMF 30A transmits an NG SETUP RESPONSE to the RAN node 10A. Here, the RAN node 10A is an example of a paging activated RAN node.

In step S101b, on the other hand, the RAN node 10B transmits, to the AMF 30A, an NG SETUP REQUEST including the paging deactivation indication in which a dummy value is configured in the supported TA list (Supported Tracking Area List) (refer to Non-Patent Literature 2). In subsequent step S102a, the AMF 30A transmits an NG SETUP RESPONSE to the RAN node 10B. Here, the RAN node 10B is an example of a paging deactivated RAN node, and a paging deactivation indication can be configured in a case where the RAN is a next generation system. Hereinafter, the AMF does not use the RAN node 10B for paging.

In step S103a, the RAN node 10A transmits a RAN CONFIGURATION UPDATE to the AMF 30A. In subsequent step S104a, the AMF 30A transmits a RAN CONFIGURATION UPDATE ACKNOWLEDGE to the RAN node 10A.

In step S103b, on the other hand, the RAN node 10B transmits a RAN CONFIGURATION UPDATE including the paging deactivation indication to the AMF 30A. In subsequent step S104b, the AMF 30A transmits the RAN CONFIGURATION UPDATE ACKNOWLEDGE to the RAN node 10B. Hereinafter, the AMF does not use the RAN node 10B for paging.

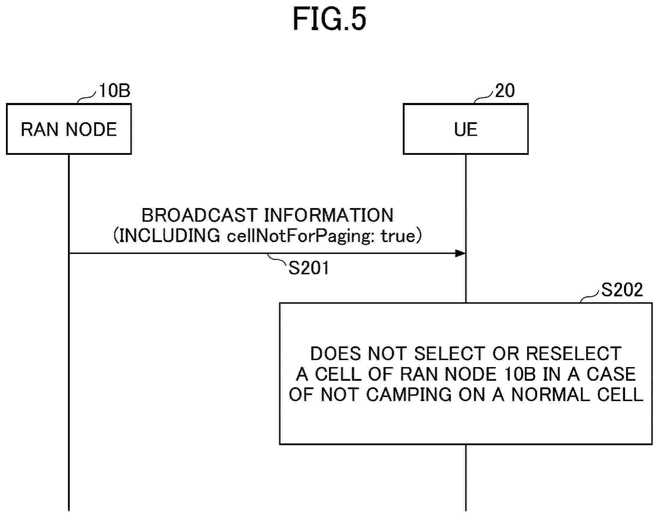

Fig. 5 is a sequence diagram for describing an example of cell selection in an embodiment of the present invention. In step S201, the RAN node 10B transmits broadcast information including an information element cellNotForPaging being true indicating the paging deactivation (refer to Non-Patent Literature 5) to the UE 20. In subsequent step S202, the UE 20 does not include the cell of the RAN node 10B as a candidate of the cell selection or the cell reselection in a case where the UE 20 is not camping on another normal cell.

Here, in DC, the MN leads, via the interface Xn, the distribution of the terminal radio capability (for example, frequency band combinations or function groups) between the MN and the SN and the distribution of radio resources in a case where the frequencies are shared between the MN and the SN. Two base stations operate on the network side also in a dual MN configuration without using DC, and thus, a process related to distribution of the radio capability and the distribution of the radio resources is required.

Accordingly, a RAN node indicates to the AMF: the terminal radio capabilities that can be used by a buddy RAN node, that is, remaining terminal radio capabilities; and the radio resources that can be used by the buddy RAN node, that is, the remaining terminal radio resources. The AMF stores the remaining terminal radio capabilities and the remaining terminal radio resources while CM-CONNECTED to the RAN. When the AMF is CM-CONNECTED to the buddy RAN node, the AMF indicates, to the buddy RAN node, the remaining terminal radio capabilities and the remaining terminal radio resources. The buddy RAN node may take into account: all of the terminal radio capabilities, the remaining radio terminal capabilities, and the remaining terminal radio resource at the time of configuring the QoS flow, for example.

It is to be noted that, with respect to all of the terminal radio capabilities, the RAN and the AMF may operate as described below as described in the conventional technical specification.

1) In a case where the RAN does not receive capabilities from the AMF, the RAN obtains the capabilities from the terminal and indicates the capabilities to the AMF.
2) The AMF stores the capabilities while the terminal is in RM-REGISTERED.
3) The AMF indicates the capabilities to the RAN.

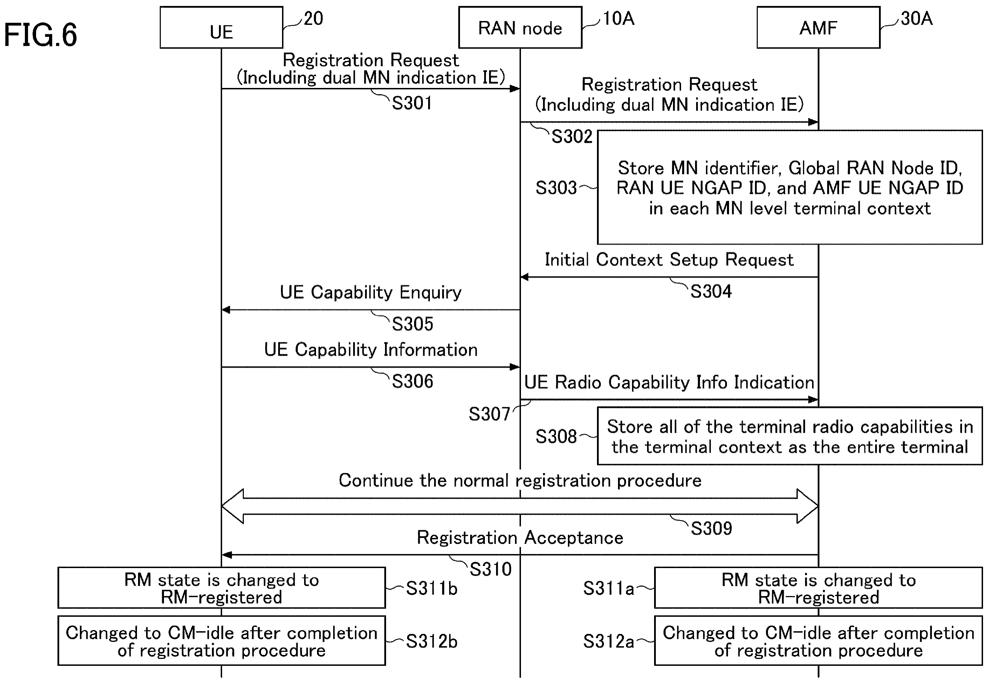

Fig. 6 is a sequence diagram for describing an example of a registration procedure in an embodiment of the present invention. In step S301 and step S302, the UE 20 transmits a registration request message including a new dual MN indication IE (Information Element) to the AMF 30A via NR and NG-RAN or via the next generation radio and the next generation RAN. It is to be noted that the RAN node corresponding to the RAT and the RAN used in step S301 will be hereinafter referred to as a RAN node 10A. With respect to the UE 20, the newly defined UE-CM state is referred to as UE-CM-CONNECTED. The UE-CM state is referred to as UE-CM-CONNECTED in a case where there is at least one CM-CONNECTED, and is referred to as UE-CM-IDLE in a case where there is no CM-CONNECTED.

In subsequent step S303, the AMF 30A stores, in each MN level terminal context, an MN identifier corresponding to the RAN node 10A, a Global RAN Node ID corresponding to the RAN node 10A, a RAN UE NGAP ID corresponding to the UE 20, and an AMF UE NGAP ID corresponding to the UE 20. The AMF 30A stores an MN identifier that is equal to MN#1, a Global RAN Node ID of the RAN node 10A that has been obtained in advance in the NG SETUP procedure, a RAN UE NGAP ID that is obtained from the RAN node 10A, and an AMF UE NGAP ID that has already been assigned, or that will be assigned later, by the AMF. The AMF 30 changes the newly defined UE-CM state to UE-CM-CONNECTED.

It is to be noted that ULI (User Location Information) indicating the user location information may be included in each MN level terminal context. It is to be noted that the AMF 30A stores, in each access level terminal context, a set of RAN UE NGAP ID, AMF UE NGAP ID, and ULI in the conventional technical specification (refer to Non-Patent Literature 5).

In subsequent step S304, the AMF 30A transmits an Initial Context Setup request (refer to Non-Patent Literature 2) message to the RAN node 10A (refer to Non-Patent Literature 5). The message does not include terminal radio capabilities.

In subsequent step S305, the RAN node 10A transmits a UE Capability Enquiry message to the UE 20 (refer to Non-Patent Literature 9). In subsequent step S306, the UE 20 transmits UE Capability Information to the RAN node 10A. The UE Capability Information may include all of or a part of the terminal radio capabilities.

In subsequent step S307, the RAN node 10A transmits a UE Radio Capability Info Indication (refer to Non-Patent Literature 2) to the AMF 30A. The UE Radio Capability Info Indication may include all of the terminal radio capabilities. In subsequent step S308, the AMF 30A stores all of or a part of the terminal radio capabilities in the terminal context as the entire terminal corresponding to the UE 20.

In subsequent step S309, the AMF 30A, the UE 20, and the RAN node 10A performs a normal registration procedure. In subsequent step S310, the AMF 30A transmits a registration acceptance to the UE 20. In subsequent step S311a, the AMF 30A changes the RM state to RM-registered. In step S312a, the AMF 30A changes the CM state to CM-IDLE after the completion of the registration procedure. In other words, the AMF 30A changes the UE-CM state to UE-CM-IDLE.

In step S311b, the UE 20 that has received the registration acceptance changes the RM state to RM-registered. In step S312b, the UE 20 changes the CM state to CM-IDLE after the completion of the registration procedure. In other words, the UE 20 changes the UE-CM state to UE-CM-IDLE.

It is to be noted that, in a case of transmitting the next registration request, the UE 20 may use an appropriate RAT and RAN that are available regardless of the RAN node 10A that is used for the current registration request.

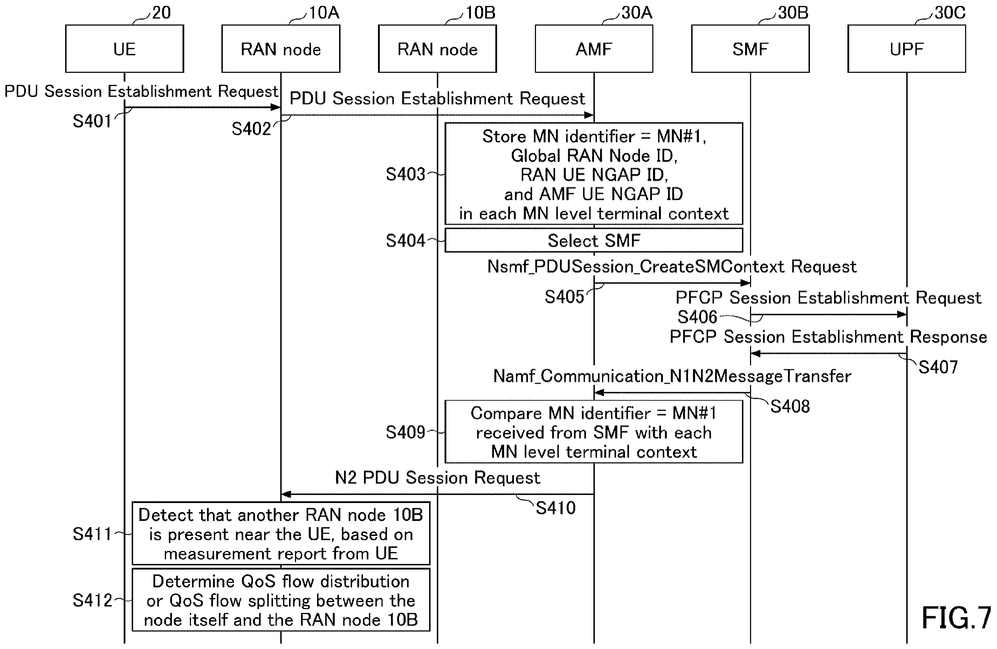

Fig. 7 is a sequence diagram for describing an example (1) of a PDU session establishment procedure in an embodiment of the present invention. In step S401 and step S402, the UE 20 transmits a PDU session establishment request to the AMF 30A via NR and NG-RAN or via the next generation radio and the next generation RAN (refer to Non-Patent Literature 5). The PDU session establishment request includes a 5GSM (5GS Session Management) capability IE (refer to Non-Patent Literature 6). New information indicating "QoS flow splitting according to RAN" is configured in the ATSSS-ST bit of the 5GSM capability IE. "MA PDU Request" is configured to Request Type and "3GPP multi-access connectivity" is configured to Request Sub-type in the UL NAS Transport that carries the PDU session establishment request (refer to Non-Patent Literature 5). It is to be noted that the RAN node corresponding to the RAT and RAN used in step S401 is hereinafter referred to as a RAN node 10A.

In subsequent step S403, the AMF 30A stores an MN identifier being equal to MN#1, a Global RAN Node ID of the RAN node 10A that has already been obtained in the NG SETUP procedure, a RAN UE NGAP ID that is obtained from the RAN node 10A, and an AMF UE NGAP ID that has already been assigned, or that will be assigned later, by the AMF 30A in each MN level terminal context.

In subsequent step S404, the AMF 30A selects an SMF 30B (refer to Non-Patent Literature 5). In subsequent step S405, the AMF 30A transmits Nsmf_PDUSession_CreateSMContext Request including the PDU session establishment request (refer to Non-Patent Literature 5) to the SMF 30B. The Nsmf_PDUSession_CreateSMContext Request includes an MN identifier being equal to MN#1.

In subsequent step S406, considering the possibility that another MN will be added, and first expecting that the MN#1 is to configure all QoS flows, the SMF 30B transmits a PFCP (Packet Forwarding Control Protocol) session establishment request to the UPF 30C (refer to Non-Patent Literature 7). The PFCP session establishment request includes a Create MAR IE. The Create MAR IE includes a 3GPP Access MN#1 Forwarding IE. It is to be noted that, in a case of the conventional ATSSS, the Create MAR IE includes a 3GPP Access Forwarding Action Information IE and a Non-3GPP Access Forwarding Action Information IE (refer to Non-Patent Literature 7). In subsequent step S407, the UPF 30C transmits a PFCP session establishment response to the SMF 30B.

In subsequent step S408, the SMF 30B transmits Namf_Communication _N1N2MessageTransfer including a PDU Session Resource Setup Request Transfer IE to the AMF 30A (refer to Non-Patent Literature 5). The PDU Session Resource Setup Request Transfer IE includes a multi-MN support indication and information indicating the QoS flow splitting by RAN. The Namf_Communication_N1N2MessageTransfer message includes an MN identifier being equal to MN#1. The SMF 30B also performs transmission of a PDU session establishment accept (refer to Non-Patent Literature 6) in the Namf_Communication_N1N2MessageTransfer message to the UE 20. The PDU session establishment accept includes an indication of a request for a PDU session branch configuration via another MN.

In subsequent step S409, the AMF 30A compares the MN identifier being equal to MN#1 received from the SMF 30B with each MN level terminal context that is locally stored. As a result of comparison, the AMF 30A recognizes that MN#1 corresponds to the RAN node 10A. In subsequent step S410, the AMF 30A transfers the PDU Session Resource Setup Request Transfer IE included in the received Namf_Communication_N1N2MessageTransfer message by using an N2PDU session request. The message that is transmitted to the RAN 10A is a message of PDU session establishment request (refer to Non-Patent Literature 2) and includes the message received in step S409 and all of or a part of the terminal radio capabilities.

In subsequent step S411, the RAN node 10A detects that another RAN node #B is present near the UE 20, based on the measurement report that is obtained from the UE 20. In subsequent step S412, the RAN node 10A determines the QoS flow distribution or the QoS flow splitting between the node itself and the RAN node #B that is expected to be appropriate, by referring to all of or a part of the terminal radio capabilities, the information from OAM (Operations administration and maintenance), or the like. The QoS flow distribution means allocating QoS flows to the node itself or to another RAN on a per-QoS flow basis. The QoS flow splitting means splitting one QoS flow into pieces, causing some pieces to be supported by the node itself, and causing remaining pieces to be supported by another RAN. It is to be noted that the RAN node 10A may follow the indication from the UE 20 and/or the UPF 30C with respect to the split ratio in a case of the QoS flow splitting. It is to be noted that the determination by the RAN node 10A in step S412 may be performed as in a case of DC except for following the indication from the UE 20 and/or the UPF 30C with respect to the split ratio of the QoS flow splitting.

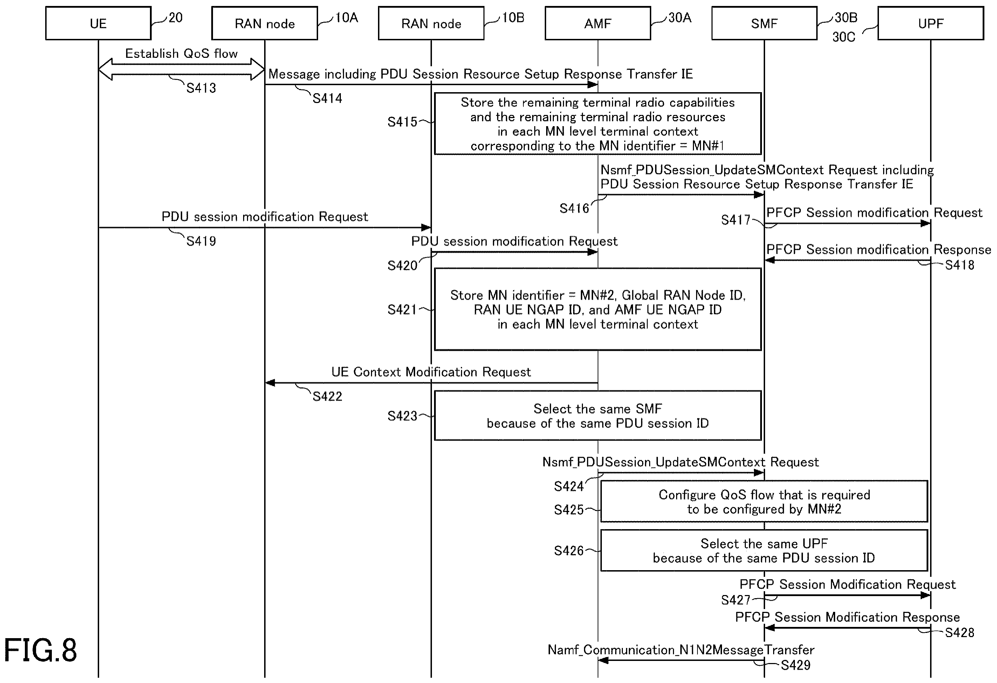

Fig. 8 is a sequence diagram for describing an example (2) of a PDU session establishment procedure in an embodiment of the present invention. In step S413, the RAN node 10A establishes all of or a part of the QoS flows determined to be supported by the node itself between the RAN node 10A and the UE 20 (refer to Non-Patent Literature 5). At the same time, the RAN node 10A transfers the PDU session establishment accept to the UE 20.

In subsequent step S414, the RAN node 10A transmits a message including a PDU Session Resource Setup Response Transfer IE (refer to Non-Patent Literature 5) to the AMF 30A. A non-established QoS flow is configured to a QoS Flow Failed to Setup List IE included in the PDU Session Resource Setup Response Transfer IE, and a QoS flow subject to the QoS flow splitting is configured to a new IE, QoS Flow Partly Setup List IE. In the PDU Session Resource Setup Response Transfer IE, in addition to the QoS Flow Partly Setup list IE, a traffic ratio for the RAN node 10A may be configured. The message that is transmitted to the AMF 30A is a message of PDU session resource establishment response, and includes: the remaining terminal radio capabilities, that is, the terminal radio capabilities that can be used by the RAN node 10B; and the remaining terminal radio resources, that is, the terminal radio resources that can be used by the RAN node B.

In subsequent step S415, the AMF 30A stores the remaining terminal radio capabilities and the remaining terminal radio resources in each MN level terminal context corresponding to the MN identifier being equal to MN#1.

In subsequent step S416, the AMF 30A transmits Nsmf_PDUSession_UpdateSMContext Request including the received PDU Session Resource Setup Response Transfer IE to the SMF 30B (refer to Non-Patent Literature 5). The Nsmf_PDUSession_UpdateSMContext Request message includes an MN identifier being equal to MN#1.

In subsequent step S417, in order to configure: the QoS flows for the MN#1; a QoS flow ratio for the MN#1 based on the QoS Flow Partly Setup List IE indicating the QOS flow for the MN#1 with respect to the split QoS flow; and the TEID (Tunnel Endpoint Identifier) on the MN#1 side, the SMF 30B transmits a PFCP session modification request to the UPF 30C. The QoS flow ratio for the MN#1 is configured in the Update 3GPP Access MN#1 Forwarding Action Information IE included in the PFCP session modification request. In subsequent step S418, the UPF 30C transmits a PFCP session modification response to the SMF 30B.

After the establishment of the QoS flow in step S413, in step S419, the UE 20 transmits a PDU session modification request to the RAN node 10B. The UE 20 configures a PDU session ID that is the same as that of the PDU session establishment request in step S401 in the PDU session modification request. In subsequent step S420, the RAN node 10B checks the 5G-S-TMSI (Temporary Mobile Subscriber Identity) in the RRC message including the received PDU session modification request, and transfers the PDU session modification request to the same AMF 30A (refer to Non-Patent Literature 5).

In subsequent step S421, the AMF 30A stores: an MN identifier being equal to MN#2; a Global RAN Node ID of the RAN node 10B that has been obtained in advance in the NG SETUP procedure; a RAN UE NGAP ID that is obtained from the RAN node 10B; and an AMF UE NGAP ID that has already been assigned or will be assigned later by the AMF 30A, in each MN level terminal context.

In subsequent step S422, the AMF 30A transmits a UE context modification request to the RAN node 10A. The UE context modification request message includes a newly defined buddy RAN node IE. The buddy RAN node IE may be a Global RAN Node ID or a RAT type of the RAN node 10B.

In subsequent step S423, the AMF 30A selects the same SMF 30B because the PDU session ID of the received PDU session modification request is the same as that of the PDU session that has already been established. In subsequent step S424, the AMF 30A transmits Nsmf_PDUSession_UpdateSMContext Request including the received PDU session modification request to the SMF 30B (refer to Non-Patent Literature 5). The Nsmf_PDUSession_UpdateSMContext Request message includes an MN identifier being equal to MN#2.

After receiving the Nsmf_PDUSession_UpdateSMContext Request message, in subsequent step S425, the SMF 30B checks the QoS Flow Failed to Setup List IE and the QoS flow Partly Setup List IE received in step S416, and determines the QoS flow that is required to be configured by the MN#2.

In subsequent step S426, the SMF 30B selects the same UPF 30C because the PDU session ID of the PDU session modification request included in the Nsmf_PDUSession_UpdateSMContext Request message is the same as that of the PDU session that has already been established.

In subsequent step S427, the SMF 30B transmits a PFCP session modification request to the UPF 30C in order to configure the QoS flow that is required to be configured by the MN#2. The SMF 30B configures, in the 3GPP Access MN#2 Forwarding Action Information IE in the Update MAR IE included in the PFCP session modification request (refer to Non-Patent Literature 7), a traffic ratio for the MN#2 that is derived from the traffic ratio for the MN#1 described in the QoS Flow Partly Setup List IE. In subsequent step S428, the UPF 30C transmits a PFCP session modification response to the SMF 30B.

In subsequent step S429, the SMF 30B recognizes that the MN is different and transmits, to the AMF 30A, Namf_Communication_N1N2MessageTransfer including the PDU Session Resource Setup Request Transfer IE (refer to Non-Patent Literature 2) with respect to the QoS flow that is required to be configured by the MN#2. The PDU Session Resource Setup Request Transfer IE includes a multi-MN non-support indication. The Namf_Communication_N1N2MessageTransfer message includes an MN identifier being equal to MN#2. The SMF 30B also performs transmission of a PDU session modification command in the Namf_Communication_N1N2MessageTransfer message to the UE 20. The PDU session modification command includes an ATSSS container IE. The SMF 30B configures, in the ATSSS container IE, the QoS flow distribution and splitting information between the MN#1 and the MN#2 (refer to Non-Patent Literature 8).

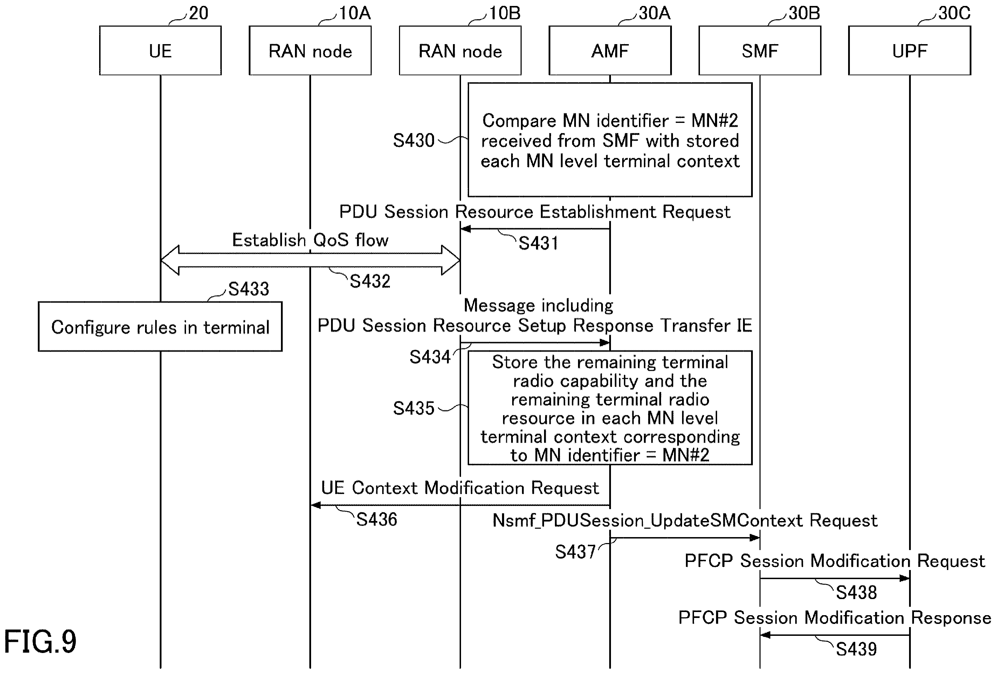

Fig. 9 is a sequence diagram for describing an example (3) of a PDU session establishment procedure in an embodiment of the present invention. In subsequent step S430, the AMF 30A compares the MN identifier, received from the SMF 30B, being equal to MN#2 with each of the locally stored MN level terminal contexts. As a result of comparison, the AMF 30A recognizes that MN#2 corresponds to the RAN node 10B.

In subsequent step S431, the AMF 30A transfers the PDU session resource establishment request including the received PDU Session Resource Setup Request Transfer IE and the PDU session modification command message to the RAN node 10B. The PDU session resource establishment request includes a newly defined buddy RAN node. The buddy RAN node IE may be a Global RAN Node ID or a RAT type of the RAN node 10A. The PDU session resource establishment request includes: all of or a part of the terminal radio capabilities; the remaining terminal radio capabilities and the remaining terminal radio resources in each MN level terminal context corresponding to the MN identifier being equal to MN#1.

In subsequent step S432, the RAN node 10B establishes a QoS flow between the RAN node 10B and the UE 20 by considering all of or a part of the terminal radio capabilities, the remaining terminal radio capabilities, and the remaining terminal radio resources received in step S431. The RAN node 10B also transfers the PDU session modification command to the UE 20 (refer to Non-Patent Literature 5). In subsequent step S433, QoS related rules in terminal are configured by using the ATSSS container IE (refer to Non-Patent Literature 5).

In subsequent step S434, the RAN node 10B transmits a message including the PDU Session Resource Setup Response Transfer IE (refer to Non-Patent Literature 5) to the AMF 30A. The message transmitted to the AMF 30A is a PDU session resource establishment response, and includes the remaining terminal radio capabilities, that is, the terminal radio capabilities that can be used by the RAN node 10A and the remaining terminal radio resources, that is, the terminal radio resources that can be used by the RAN node A.

In subsequent step S435, the AMF 30A stores the remaining terminal radio capabilities and the remaining terminal radio resources in each MN level terminal context corresponding to the MN identifier being equal to MN#2. In subsequent step S436, the AMF 30A transmits a UE context modification request (refer to Non-Patent Literature 2) to the RAN node 10A. The UE context modification request includes the remaining terminal radio capabilities and the remaining terminal radio resources in each MN level terminal context corresponding to the MN identifier being equal to MN#2.

In subsequent step S437, the AMF 30A transmits Nsmf_PDUSession_UpdateSMContext Request (refer to Non-Patent Literature 5) including the received PDU Session Resource Setup Response Transfer IE to the SMF 30B. The Nsmf_PDUSession_UpdateSMContext Request message includes an MN identifier being equal to MN#2.

In subsequent step S438, the SMF 30B transmits a PFCP session modification request to the UPF 30C in order to configure the TEID on the MN#2 side. In subsequent step S439, the UPF 30C transmits a PFCP session modification response to the SMF 30B.

In addition, with respect to the handover procedure, the RAN node 10A may determine the handover destination by considering: the measurement report; the RRM information; the buddy RAN node; the remaining terminal radio capabilities and the remaining terminal radio resources of the buddy RAN node; and the RAN deployment information obtained from OAM (refer to Non-Patent Literature 10). For example, a configuration will be available in which one of the two MNs belongs to NG-RAN and the other of the two MNs belongs to the next generation RAN at the time of handover by taking into account the RAN type or RAT of the buddy RAN node. It is to be noted that the mechanism of enabling the above-described configuration at the time of cell selection may depend on the terminal implementation.

According to the above-described embodiment, a dual MN configuration can be configured in which different RATs are respectively used by the MNs and communications using the dual MN can be performed by having one MN considering the remaining radio resources of the other MN.

In other words, in a wireless communication system in which two base stations operate as a master node, the radio resource distribution can be performed.

### (Device configuration)

Next, a functional configuration example of the base station 10, network node 30 and the terminal 20 that perform processes and operations described above will be described. The base station 10, the network node 30 and the terminal 20 include functions for implementing the embodiments described above. It should be noted, however, that each of the base station 10, the network node 30 and the terminal 20 may include only some of the functions in the embodiments.

### <Base station 10 and network node 30>

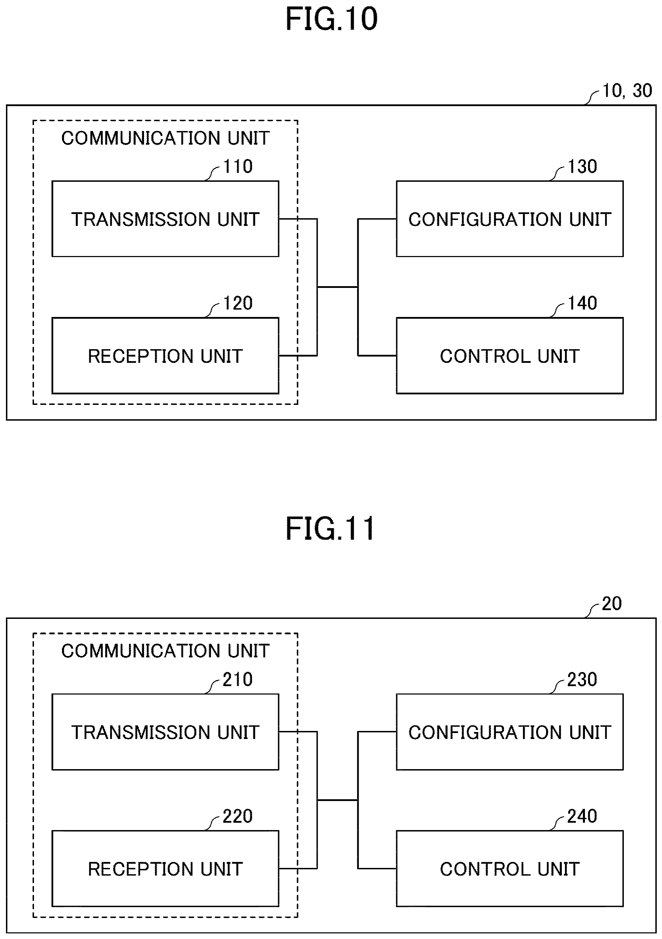

Fig. 10 is a drawing illustrating an example of a functional configuration of the base station 10 and the network node 30. As shown in Fig. 10, the base station 10 includes a transmission unit 110, a reception unit 120, a configuration unit 130, and a control unit 140. The functional configuration illustrated in Fig. 10 is merely an example. Functional divisions and names of functional units may be anything as long as operations according to an embodiment of the present invention can be performed. Note that the network node 30 may have the same functional configuration as the base station 10. In addition, the network nodes 30 having multiple different functions in the system architecture may be composed of multiple network nodes 30 separated for each function.

The transmission unit 110 includes a function for generating a signal to be transmitted to the terminal 20 or to another network node 30 and transmitting the signal in a wired manner or wireless manner. The reception unit 120 includes a function for receiving various signals transmitted from the terminal 20 or another network node 30, and for acquiring, for example, information of an upper layer from the received signals. A communication unit including the transmission unit 110 and the reception unit 120 may be configured.

The configuration unit 130 stores preset configuration information and various configuration information items to be transmitted to the terminal 20 in a storage apparatus and reads the preset configuration information from the storage apparatus as necessary. The contents of the configuration information are, for example, information related to the dual MN configuration.

The control unit 140 performs a process related to communications in the network as described in the embodiments. In addition, the control unit 140 performs processing of communications using the dual MN configuration. Further, the control unit 140 performs a process related to communications with the terminal 20. The functional units related to signal transmission in the control unit 140 may be included in the transmission unit 110, and the functional units related to signal reception in the control unit 140 may be included in the reception unit 120.

### <Terminal 20>

Fig. 11 is a diagram illustrating an example of a functional configuration of the terminal 20. As shown in Fig. 11, the terminal 20 includes a transmission unit 210, a reception unit 220, a configuration unit 230, and a control unit 240. The functional configuration illustrated in Fig. 11 is merely an example. Functional divisions and names of functional units may be anything as long as operations according to an embodiment of the present invention can be performed. In addition, the communication apparatus that is a resource holder 20 may have a functional configuration similar to the terminal 20.

The transmission unit 210 generates a transmission signal from transmission data and transmits the transmission signal wirelessly. The reception unit 220 receives various signals wirelessly and obtains higher layer signals from the received physical layer signals. In addition, the reception unit 220 has a function of receiving NR-PSS, NR-SSS, NR-PBCH, DL/UL control signals or reference signals, or the like, transmitted from the network node 30. A communication unit including the transmission unit 210 and the reception unit 220 may be configured.

The configuration unit 230 stores various types of configuration information received from the network node 30 by the reception unit 220 in the storage device and reads the configuration information from the storage device as necessary. In addition, the configuration unit 230 also stores pre-configured configuration information. The contents of the configuration information are, for example, information related to the dual MN configuration.

The control unit 240 performs a process related to communications in the network as described in the embodiments. The functional units related to signal transmission in the control unit 240 may be included in the transmission unit 210, and the functional units related to signal reception in the control unit 240 may be included in the reception unit 220.

### (Hardware structure)

The block diagrams that have been used to describe the above embodiments (Fig. 10 and Fig. 11) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

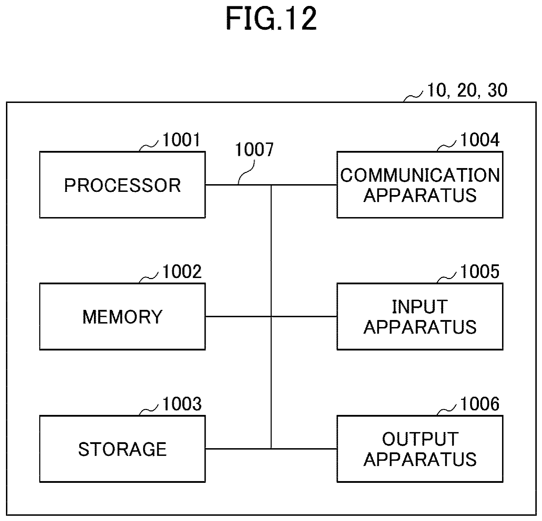

For example, the network node 30, terminal 20, etc., according to an embodiment of the present disclosure may function as a computer for processing the radio communication method of the present disclosure. Fig. 12 is a diagram to show an example of a hardware structure of the base station 10 and the terminal 20 according to one embodiment. The network node 30 may have the same hardware configuration as the base station 10. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in Fig. 10 may be implemented by control programs that are stored in the memory 1002 and that operate on the processor 1001. In addition, for example, the control unit 240 of the terminal 20 illustrated in Fig. 11 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magnetooptical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output device that outputs something to the outside (e.g., display, speaker, LED lamp). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

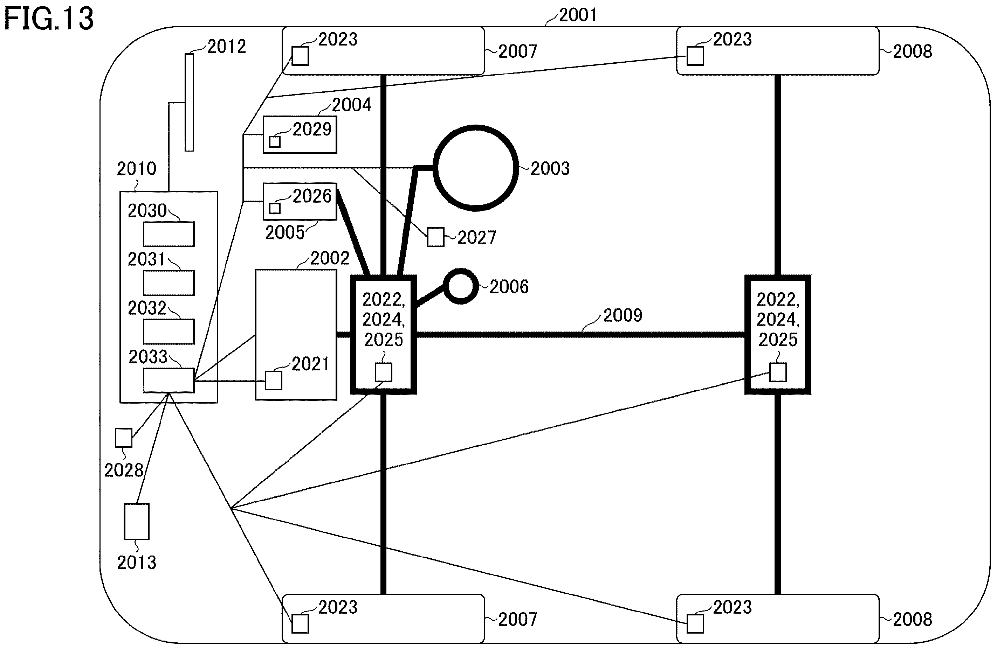

Fig. 13 shows an example of a configuration of a vehicle 2001. As shown in Fig. 13, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver' s operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from a drive unit 2002, a steering unit 2003, an accelerator pedal 2004, a brake pedal 2005, a shift lever 2006, front wheels 2007, rear wheels 2008, an axle 2009, a microprocessor 2031 and a memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2028 described above input to the electronic control unit 2010, information obtained based on the signals, and information based on an input from the outside (a user) obtained via the information service unit 2012, to the external apparatus via radio communication. The electronic control unit 2010, the various sensors 2021 to 2028, the information service unit 2012, and the like may be referred to as input units that receive input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display, a speaker, or the like, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Embodiment summary)

As described above, according to an embodiment of the present invention, a network node is provided. The network node includes: a communication unit configured to receive, from a terminal via a RAN (Radio Access Network) node, a registration request including information indicating that two master nodes are used; and a control unit configured to store two terminal contexts of respective master nodes. The control unit stores master node identifiers corresponding to RAN nodes, remaining terminal radio capabilities, and remaining terminal radio resources in the terminal contexts of respective master nodes, the control unit derives two CM (Connection management) states of the terminal, based on the terminal contexts of respective master nodes, and the communication unit indicates a remaining terminal radio capability and a remaining terminal radio resource included in a terminal context of the terminal contexts of respective master nodes corresponding to one of the two master nodes, to another of the two master nodes.

According to the above-described configuration, a dual MN configuration can be configured in which different RATs are respectively used by the MNs and communications using the dual MN can be performed by considering the remaining radio resources of each other. In other words, in a wireless communication system in which two base stations operate as a master node, the radio resource distribution can be performed.

The communication unit may receive, from one of the two master nodes, a remaining terminal radio capability and a remaining terminal radio resource that can be used by another of the two master nodes. According to the above-described configuration, a dual MN configuration can be configured in which different RATs are respectively used by the MN and communications using the dual MN can be performed by considering the remaining radio resources of each other.

The communication unit may receive all of or a part of a terminal radio capability from one of the two master nodes. According to the above-described configuration, a dual MN configuration can be configured in which different RATs are respectively used by the MN and communications using the dual MN can be performed by considering the remaining radio resources of each other.

The control unit may store the all of or the part of the terminal radio capability in a terminal context as an entire terminal. According to the above-described configuration, a dual MN configuration can be configured in which different RATs are respectively used by the MN and communications using the dual MN can be performed by considering the remaining radio resources of each other.

In addition, according to an embodiment of the present invention, a communication method performed by a network node is provided. The communication method includes: receiving, from a terminal via a RAN (Radio Access Network) node, a registration request including information indicating that two master nodes are used; storing two terminal contexts of respective master nodes; storing master node identifiers corresponding to RAN nodes, global RAN node identifiers corresponding to the RAN nodes, an identifier for identifying the terminal on the NG (Next Generation) interface in the RAN nodes, an identifier for identifying the terminal on the NG interface in the AMF (Access and Mobility Management Function), remaining terminal radio capabilities, and remaining terminal radio resources in the terminal contexts of respective master nodes; deriving two CM (Connection management) states of the terminal, based on the terminal contexts of respective master nodes; and indicating a remaining terminal radio capability and a remaining terminal radio resource included in a terminal context of the terminal contexts of respective master nodes corresponding to one of the two master nodes, to another of the two master nodes.

According to the above-described configuration, a dual MN configuration can be configured in which different RATs are respectively used by the MNs and communications using the dual MN can be performed by considering the remaining radio resources of each other. In other words, in a wireless communication system in which two base stations operate as a master node, the radio resource distribution can be performed.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may each be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, the information indication may be performed by physical layer signaling (e.g., DCI (Downlink Control Information), UCI (Uplink Control Information)), upper layer signaling (e.g., RRC (Radio Resource Control) signaling, MAC (Medium Access Control) signaling), broadcast information (MIB (Master Information Block), SIB (System Information Block)), other signals, or a combination thereof. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application. In addition, a plurality of systems may be combined (for example, a combination of: at least one of LTE or LTE-A; and 5G, and the like) to be applied.

The order of processes, sequences, flowcharts, and so on that have been used to describe the aspects/embodiments in the present specification may be re-ordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because various channels (e.g., PUCCH, PDCCH, or the like) and information elements may be identified by any suitable names, the various names assigned to these various channels and information elements are not used as limitations.

In the present disclosure, the terms "Base Station (BS)", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)", "user terminal", "user equipment (UE)", and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station is an object that can move, and the moving speed can be any speed. In addition, a mobile station that is not moving is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station or a mobile station also includes an apparatus which does not necessarily move during communication operation. For example, at least one of the base station or the mobile station may be an IoT (Internet of Things) device such as a sensor.

Furthermore, the base station in the present disclosure may be interpreted as a user terminal. For example, each aspect/embodiment of the present disclosure may be applied to the structure in which communications between a base station and a user terminal is replaced with communications between a plurality of terminals 20 (for example, which may be referred to as Device-to-Device (D2D), Vehicle-to-Everything (V2X), and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompasses a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
30 Network node
1001 Processor
1002 Memory
1003 Storage
1004 Communication apparatus
1005 Input apparatus
1006 Output apparatus

## Claims

1. A network node comprising:
a communication unit configured to receive, from a terminal via a RAN (Radio Access Network) node, a registration request including information indicating that two master nodes are used; and
a control unit configured to store two terminal contexts of the two respective master nodes, wherein
the control unit stores master node identifiers corresponding to RAN nodes, remaining terminal radio capabilities, and remaining terminal radio resources in the terminal contexts of respective master nodes,
the control unit derives two CM (Connection management) states of the terminal, based on the terminal contexts of the two respective master nodes, and
the communication unit indicates a remaining terminal radio capability and a remaining terminal radio resource included in a terminal context, of the terminal contexts of the two respective master nodes, corresponding to one of the two master nodes, to another of the two master nodes.

2. The network node as claimed in claim 1, wherein the communication unit receives, from one of the two master nodes, a remaining terminal radio capability and a remaining terminal radio resource that can be used by another of the two master nodes.

3. The network node as claimed in claim 1, wherein the communication unit receives all of or a part of a terminal radio capability from one of the two master nodes.

4. The network node as claimed in claim 3, wherein the control unit stores the all of or the part of the terminal radio capability in a terminal context as an entire terminal.

5. A communication method performed by a network node, the communication method comprising:
receiving, from a terminal via a RAN (Radio Access Network) node, a registration request including information indicating that two master nodes are used;
storing two terminal contexts of the two respective master nodes;
storing master node identifiers corresponding to RAN nodes, remaining terminal radio capabilities, and remaining terminal radio resources in the terminal contexts of respective master nodes;
deriving two CM (Connection management) states of the terminal, based on the terminal contexts of the two respective master nodes; and
indicating a remaining terminal radio capability and a remaining terminal radio resource included in a terminal context, of the terminal contexts of the two respective master nodes, corresponding to one of the two master nodes, to another of the two master nodes.
